# EUROPÄISCHE PATENTSCHRIFT

(11) **EP 0 548 574 B1**
(45) Veröffentlichungstag und Bekanntmachung des Hinweises auf die Patenterteilung: **04.06.1997**
(21) Anmeldenummer: 92120133.1
(22) Anmeldetag: 26.11.1992
(51) Int. Cl.: H05B 3/34

(54) **Flächenheizelement und Verfahren zu seiner Herstellung**
Planar heating element and method of manufacture
Elément chauffant pour surface et méthode de fabrication

(30) Priorität: 23.12.1991 DE 4142774
(43) Veröffentlichungstag der Anmeldung: 30.06.1993
(73) Patentinhaber: I.G. Bauerhin GmbH elektro-technische Fabrik, D-63584 Gründau (DE)
(72) Erfinder: Michelmann, Jochen, W-6460 Gelnhausen (DE); Hilmer, Josef, W-6466 Gründau 2 (DE)
(74) Vertreter: Müller-Wolff, Thomas, Dipl.-Ing.

(56) Entgegenhaltungen:
- EP-A- 0 463 516
- EP-A- 0 532 468
- DE-A- 1 803 404
- DE-A- 4 136 425
- DE-B- 1 186 157
- DE-C- 867 263
- GB-A- 750 930
- US-A- 3 232 080
- US-A- 3 472 289

## Beschreibung

Die Erfindung betrifft ein Flächenheizelement, insbesondere für Sitzheizungen im Kfz-Bereich, bestehend aus im wesentlichen parallel angeordneten Heizdrähten, die an ihren Enden und/oder Umlenkstellen mit Stromzuführungsleitern elektrisch verbunden sind und die in ein überwiegend textiles Grundmaterial eingebettet sind, wobei die Heizleiter 1 sinusförmig über ein gewirktes Grundmaterial verlaufen und zumindest an den Maxima der Amplituden in das textile Grundmaterial eingebunden sind.

Ein Flächenheizelement der eingangs genannten Art ist aus der US 34 72 289 A bekannt. Darin wird ein Heizlelement beschrieben, das insbesondere für Sitzheizungen im Kfz-Bereich geeignet ist und aus im wesentlich parallel angeordneten Heizdrähten besteht, die an ihren Enden und/oder Umlenkstellen mit Stromzuführungsleitern elektrisch verbunden sind. Die Heizleiter sind sinusförmig über das textile Grundmaterial verlegt und in ein überwiegend textiles Grundmaterial eingebettet, wobei die physikalischen Eigenschaften des Garns und des Heizleiters weitgehend übereinstimmen sollen.

Ein weiteres Flächenheizelement ist aus der DE-OS 29 48 047 bekannt. Dabei handelt es sich um ein Gewebe mit Kettfäden aus Isoliermaterial und Schußfäden aus elektrisch leitendem Draht, die zusammen ein Widerstands- oder Heizgitter bilden. Die Schußfäden sind aus einzelnen abgelenkten Drähten hergestellt, deren Enden miteinander zu einer Parallelschaltung verbunden sind. Die Parallelschaltung erfolgt über feste Anschlußelemente wie Kabelschuhe, angeschweißte Blechlaschen oder dgl., so daß das beschriebene Widerstands- oder Heizgitter in seinem Anwendungsbereich auf starre bzw. halbstarre Elemente beschränkt ist.

Bei einer flexiblen Anordnung der Heizdrähte besteht die Gefahr, daß sich die Berührungsflächen zwischen Heizleiter und Kontaktleiter verschieben und damit der elektrische Widerstand zwischen den Leitern sich verändert. Dies kann in der Folge zu einer örtlichen Überhitzung oder sogar zu einem Schmelzen einzelner Heizleiterdrähte führen, wodurch der elektrische Leitungskreis unterbrochen wird. In manchen Fällen besteht auch die Gefahr von Kurzschlüssen, die zu noch höheren Überhitzungen führen.

Bei der Verwendung verschiedener Materialien von Heizleiter und Kontaktleiter bestehen ferner mechanische und elektro-chemische Probleme, denen man durch geeignete Maßnahmen begegnen muß. So besteht durch den häufigen Temperaturwechsel Korrosionsgefahr, insbesondere bei Kombinationen zwischen unedlen und edlen Metallen und solchen, die ein unterschiedliches Korrosionspotential aufweisen. Ein Korrosionsangriff schwächt die Verbindungsqualität und ändert den Widerstandswert, so daß sowohl die mechanische als auch die stromabhängige Belastbarkeit der Verbindungsstelle stark herabgesetzt wird.

Die mechanische Belastbarkeit ist insbesondere bei solchen Flächenheizelementen kritisch, die aus Materialien unterschiedlichen mechanischen Verhaltens zusammengesetzt sind. So ist es üblich, unterschiedliche Materialien für das Grundgewebe und den Heizleiter zu verwenden, die sich unter mechanischer Belastung sehr inhomogen verhalten. Sofern die Kettfäden aus Isoliermaterial und die Schußfäden aus Stahldraht bestehen, werden relativ komplizierte Web- bzw. Wirkverfahren eingesetzt, um eine zuverlässige Einbindung der Heizleiter in das Grundgewebe zu gewährleisten. Dennoch ist die Flexibilität der damit hergestellten Flächenheizelemente stark eingeschränkt, was insbesondere bei der Verwendung für Sitzheizungen im Kfz-Bereich nachteilig ist.

Aufgabe der vorliegenden Erfindung ist es, bei einem Heizelement der eingangs genannten Art eine Verbesserung der mechanischen Belastbarkeit von unter Verwendung von Kohlefasern hergestellten Gewirken bei Zug- und Knickbeanspruchungen und hinsichtlich der Korrosionsstabilität an den Kontaktstellen zwischen Heizleiter und Stromzuführungsleiter zu erreichen und damit die beschriebenen Nachteile der mangelnden Flexibilität und der Inhomogenität zu beseitigen, wobei eine erhöhte Sicherheit gegen Veränderungen des elektrischen Widerstandes in der Kontaktfläche und damit ein erhöhter Schutz gegen örtliche Überhitzung ermöglicht werden soll.

Darüber hinaus soll ein Verfahren zur kontinuierlichen Fertigung von Flächenheizelementen, insbesondere von Pkw-Sitzbezügen, entwickelt werden, das mechanisch einfacher und auch bei komplizierten Strukturen des Grundgewirkes zuverlässig durchführbar ist.

Diese Aufgabe wird durch die in den Patentansprüchen angegebenen Merkmale gelöst.

Es hat sich gezeigt, daß ein Heizleiter aus Kohlefasern derart durch die Maschen des Grundgewirkes geführt werden kann, daß er eine konstante Berührungsfläche mit den Kontaktleitern bildet und sogar bei erhöhter mechanischer Belastung gegen die Kontaktleiter durch ein Zusammenziehen der Maschen angepreßt wird.

Für die überraschende Wirkung eines aus Kohlefasern bestehenden Kohlefadens im Gewirke eines Flächenheizelementes ist nicht allein die erhöhte Zugfestigkeit des Kohlefadens selbst verantwortlich. Es mußte erst für eine besondere Einbindung des Kohlefasermaterials in das Grundgewebe gesorgt werden, um die bekannten Eigenschaften des Kohlefasermaterials, wie z.B. erhöhte Zugfestigkeit und verbesserte Korrosionsbeständigkeit, im Verbund mit einem Flächenheizelement zu nutzen. Wenn nämlich die Kohlefasern nach der bisher üblichen Verbindungstechnik in ein Flächenheizelement eingebracht werden, besteht die Gefahr, daß sich die gute Stromleitfähigkeit der Kohlefasern bei einer örtlichen Überhitzung noch stärker auswirken, weil Kohlefasern bekanntlich gleichzeitig ein schlechter Wärmeleiter sind. Mit dem erfindungsgemäßen Flächenheizelement ist es erstmalig gelungen, Kohlefasern als Teil des Grundmaterials in dieses einzuwirken, so daß ein vollständig neuer Materialaufbau entsteht.

Nach dem erfindungsgemäßen Verfahren können die Kohlefasern direkt vom Kettbaum einer Wirkmaschine oder vom Gatter abgenommen werden und mit dem maschenbildenden Faden zu einem homogenen Gewirke verbunden werden. Die Kohlefasern bilden dabei als Heizfaden den verbindenden Faden zwischen den Maschen und verlaufen rechtwinklig zur Maschenreihe von Masche zu Masche.

In Höhe einer Kontaktleiste kreuzen die Heizleiter aus Kohlefasern die Kontaktleiter im rechten Winkel und werden durch die darüberliegenden Maschen gegen die Kontaktleiter angepreßt. Dadurch entsteht ein homogenes Heizelement mit besonders hoher Flexibilität, das auch unter mechanischen Belastungen einen stets gleichbleibenden Widerstandsbeiwert aufweist.

Im folgenden wird die Erfindung anhand mehrerer Ausführungsbeispiele erläutert. Es zeigt:

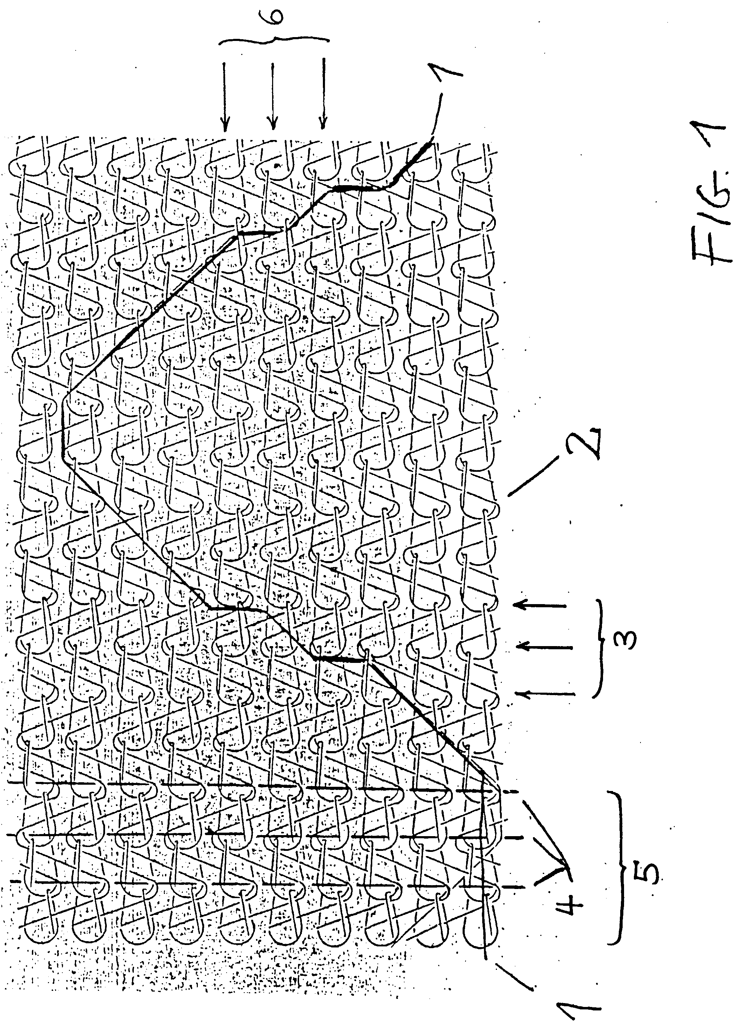

- Fig. 1:: Ausschnitt aus dem erfindungsgemäßen Flächenheizelement in Draufsicht;

Das Flächenheizelement besteht aus einer Vielzahl parallel laufender Maschenfäden 2, in die ein Heizleiter 1 sinusförmig eingelegt ist. Im Bereich der Kontaktleiter 3 kreuzt der Heizleiter 1 die Kontaktleiste 4, wobei die Maschen aus textilem Gewebe über die Kontaktleiter 3 gelegt sind und diese gegen den Heizleiter 1 anpressen.

In einer bevorzugten Ausführungsform der Erfindung wird der Kontaktbereich durch eine vermehrte Maschenbildung verstärkt. Dies kann sowohl durch Maschen aus Textilmaterial als auch durch Maschen aus einem Faden Kohlestoff-Fasern erzielt werden, wobei im letzten Fall ein Kohlenstoff-Fasergeflecht in der Kontaktzone entsteht.

Durch das erfindungsgemäße Verfahren des Einwirkens eines Heizleiters in ein textiles Grundgewirke lassen sich die bisherigen Probleme bei der Herstellung von Flächenheizelementen erfolgreich lösen. Die Elastizität des Elementes läßt sich durch die Wahl des geeigneten Garnes und der Anzahl der Maschen bzw. der Maschenweite innerhalb weiter Grenzen erreichen.

Wie aus Fig. 1 ersichtlich, sind die Kontaktleiter 3 als Kontaktleiste 4 an den sich gegenüberliegenden Rapportkanten im rechten Winkel zum Verlauf des Heizleiters 1 angeordnet. Die in Richtung des Heizleiters 1 anliegenden Maschen bilden ein Maschenstäbchen, das sich auch über die Kontaktleiste 4 hinweg erstreckt. Man erkennt , daß bei einem Zusammenziehen der Maschen der Heizleiter 1 aus Kohlefasern gegen die Kontaktleiter 3 angepreßt wird.

Bei dem in Fig. 1 dargestellten Gewirke ist eine Kohlefaser im Teilschuß eingewirkt. Es ist auch möglich, Kohlefasern zur Verbesserung der Kontaktierung im Voll- oder Magazinschußverfahren mit dem Grundgewirke zu verbinden.

Bei der in Fig. 1 dargestellten Bindungsart in der Kontaktierungsleiste werden Kohlefasern als Heizdraht verwendet. Die Heizleiter 4 liegen im rechten Winkel zum Vollschuß bzw. Magazinschuß in der Masche und werden von dieser an den Kontaktleiter angepreßt. Das Herstellungsverfahren geschieht auf üblichen Wirkmaschinen, die an den Kontaktstellen nach dem Prinzip des "versetzten Stehfadens" arbeiten.

Um ein homogenes Flächenheizelement mit Kohlefasermaterial herzustellen, sollten die Heizdrähte in den Maschenstäbchen verlaufen. Es ist auch möglich, die einzelnen Fasern eines Heizdrahtes getrennt durch die Maschenstäbchen zu führen, wodurch eine noch festere und dichtere Einbindung in das Grundgewirke erfolgt.

## Patentansprüche

1. Flächenheizelement, insbesondere für Sitzheizungen im Kfz-Bereich, bestehend aus im wesentlichen parallel angeordneten Heizdrähten, die an ihren Enden und/oder Umlenkstellen mit Stromzuführungsleitern elektrisch verbunden sind und die in ein überwiegend textiles Grundmaterial eingebettet sind, wobei die Heizleiter (1) sinusförmig über ein gewirktes Grundmaterial verlaufen und zumindest an den Maxima der Amplituden in das textile Grundmaterial eingebunden sind,
dadurch gekennzeichnet,
daß als Heizleiter (1) ein Filament aus Kohlefasern verwendet wird, wobei die Kohlefasern im Teilschuß oder im Kurzschuß in das Grundmaterial eingewirkt sind und
daß die Stromzuführungsleiter als Kontaktleiter (4) an den sich gegenüberliegenden Rapportkanten (5) rechtwinklig zur Sinusachse angeordnet sind und jeder Heizleiter (1) mit jedem Kontaktleiter (4) elektrisch leitend verbunden ist, wobei die Heizleiter aus Kohlefasern die Kontaktleiter in Höhe der Rapportkante (5) im rechten Winkel kreuzen und durch die darüberliegenden Maschen gegen die Kontaktleiter (4) angepreßt werden.

2. Flächenheizelement nach Anspruch 1,
dadurch gekennzeichnet,
daß die Kontaktleiter (4) aus Kohlefaser-Material bestehen, wobei an den Rapportkanten (5) das Grundmaterial durch vermehrte Maschenbildung verstärkt ist.

3. Flächenheizelement nach einem der vorhergehenden Ansprüche,
dadurch gekennzeichnet,
daß im Bereich der Kontaktleiter (4) das Grundmaterial aus Kohlenstoff-Fasern mit einem klebstoffhaltigen Material beschichtet oder durch eine zusätzliche Abdeckung befestigt ist.

4. Verfahren zur Herstellung eines Flächenheizelementes nach einem der vorhergehenden Ansprüche 1 - 3,
dadurch gekennzeichnet,
daß beim Wirken des Grundmaterials ein Heizleiter aus einzelnen oder gebündelten Kohlefasern im Teilschuß über mindestens zwei senkrecht zur Maschenreihe (3) verlaufende Maschenstäbchen (6) gelegt wird, wobei im Kontaktierungsbereich die Heizleiter (1) aus Kohlefasern im rechten Winkel zum Vollschuß bzw. Magazinschuß in das Grundgewirke eingelegt werden und dabei die aus den Kohlefasern bestehenden Heizleiter (1) in den zu den Maschenreihen (3) senkrecht verlaufenden Maschenstäbchen (6) liegen.

## Claims

1. A planar heating element, especially for seat heating systems in motor vehicles, consisting of substantially parallel heating wires which, at their ends and/or in their deflected regions, are electrically connected to current supply conductors and which are embedded into a predominantly textile base material, with the heating conductors (1) extending sinusoidally across a knitted base material and, at least at the amplitude maxima,being bonded into the textile base material,
characterised in
that the heating conductors (1) are provided in the form of carbon fibre filaments, with the carbon fibres being knitted into the base material in the form of partial wefts or short wefts, and that the current supply conductors are arranged in the form of contact conductors (4) at the opposed repeat edges (5) at a right angle relative to the sine axis and that each heating conductor (1) is electrically conductingly connected to each contact conductor (4), with the carbon fibre heating conductors intersecting the contact conductors at the level of the repeat edge (5) at right angles while being pressed against the contact conductors (4) by the stiches positioned above.

2. A planar heating element according to claim 1,
characterised in
that the contact conductors (4) consist of a carbon fibre material, with the base material at the repeat edges (5) being reinforced by an increased number of stiches.

3. A planar heating element according to any one of the preceding claims,
characterised in
that, in the region of the contact conductors (4), the carbon fibre base material is coated by an adhesive-containing material or fixed by an additional covering.

4. A method of producing a planar heating element according to any one of the preceding claims,
characterised in
that, when knitting the base material, a heating conductor consisting of individual or bundled carbon fibres, in the form of a partial weft, is positioned across at least two stich wales (6) extending perpendicularly relative to the row (3) of stiches, that, in the contact region, the carbon fibre heating conductors (1) are inserted into the basic knitted material at a right angle relative to the full weft or magazine weft and that the carbon fibre heating conductors (1) are positioned in the stich wales (6) extending perpendicularly relative to the rows (3) of stiches.

## Revendications

1. Elément chauffant plat, en particulier pour des chauffages de sièges dans le domaine des véhicules automobiles, constitué par des fils chauffants qui sont disposés parallèlement pour l'essentiel, qui sont reliés électriquement à des conducteurs d'amenée du courant à leurs extrémités et/ou en leurs endroits de renvoi et qui sont noyés dans une matière de base principalement textile, cependant que les conducteurs chauffants (1) s'étendent en forme de sinusoïdes sur une matière de base tricotée, et qu'ils sont liés à la matière textile de base, du moins aux maxima des amplitudes, caractérisé par le fait que l'on utilise comme conducteur chauffant (1) un filament en fibres de carbone, les fibres de carbone étant liées à la matière de base par tricotage en trame partielle ou en trame courte, et par le fait que les conducteurs d'amenée du courant sont disposés perpendiculairement à l'axe de la sinusoide sous la forme de conducteurs de contact (4) sur les bords de rapport opposés (5), et que chaque conducteur chauffant (1) est relié d'une manière conductrice de l'électricité à chaque conducteur de contact (4), cependant que les conducteurs chauffants en fibres de carbone croisent à angle droit les conducteurs de contact au niveau des bords de rapport (5), et qu'ils sont serrés contre les conducteurs de contact (4) par les mailles placées sur eux.

2. Elément chauffant plat selon la revendication 1, caractérisé par le fait que les conducteurs de contact (4) sont constitués par une matière en fibres de carbone, la matière de base étant renforcée par une multiplication de la formation des mailles sur les bords de rapport (5).

3. Elément chauffant plat selon l'une des revendications précédentes, caractérisé par le fait que, dans la région des. conducteurs de contact (4), la matière de base en fibres de carbone est revêtue d'une matière contenant un adhésif ou fixée par un recouvrement supplémentaire.

4. Procédé pour fabriquer un élément chauffant plat selon l'une des revendications précédentes 1 à 3, caractérisé par le fait que, lors du tricotage de la matière de base, un conducteur chauffant constitué par des fibres de carbone individuelles ou en faisceau est posé en trame partielle sur au moins deux colonnes de mailles (6) qui s'étendent perpendiculairement à la rangée de mailles (3), cependant que, dans la zone de contact, les conducteurs chauffants (1) en fibres de carbone sont insérés dans le tricot de base perpendiculairement à la trame pleine ou à la trame de magasin, respectivement, et que les conducteurs chauffants (1) constitués par les fibres de carbone sont situés dans les colonnes de mailles (6) qui s'étendent perpendiculairement aux rangées de mailles (3).
